(19) Europäisches Patentamt
European Patent Office
Office européen des brevets

(11) Veröffentlichungsnummer : **0 091 020**
**B1**

# (12) EUROPÄISCHE PATENTSCHRIFT

(45) Veröffentlichungstag der Patentschrift : **05.03.86**

(21) Anmeldenummer : **83102917.8**

(22) Anmeldetag : **24.03.83**

(51) Int. Cl.[4] : **C 09 B 33/02**, C 09 B 45/24// D06P3/32

(54) **Disazofarbstoffe.**

(30) Priorität : **02.04.82 DE 3212240**

(43) Veröffentlichungstag der Anmeldung : **12.10.83 Patentblatt 83/41**

(45) Bekanntmachung des Hinweises auf die Patenterteilung : **05.03.86 Patentblatt 86/10**

(84) Benannte Vertragsstaaten : **CH DE FR GB IT LI**

(56) Entgegenhaltungen :
**EP-A- 0 022 485**
**EP-A- 0 045 868**
**DE-C- 278 142**
**FR-A- 781 862**
**FR-A- 2 096 040**
**GB-A- 440 150**
**US-A- 2 111 559**
**US-A- 2 200 445**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Bergmann, Udo, Dr.**
**Merckstrasse 26**
**D-6100 Darmstadt (DE)**
Erfinder : **Hansen, Guenter, Dr.**
**Alwin-Mittasch-Platz 8**
**D-6700 Ludwigshafen (DE)**
Erfinder : **Zeidler, Georg**
**Mutterstadter Strasse 7**
**D-6701 Dannstadt-Schauernheim (DE)**

**EP 0 091 020 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Cr-, Co- oder Fe-Komplexe von Verbindungen, die in Form der freien Säuren der allgemeinen Formel I

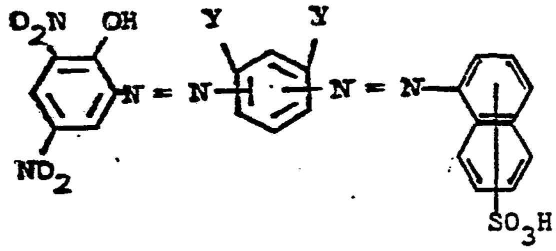

entsprechen, in der die Sulphogruppe in 4-, 5-, 6-, 7- oder 8-Stellung steht und die Reste Y anabhängig voneinander Hydroxy oder Amino sind.

Zur Herstellung der Verbindungen der Formel I kann man Verbindungen der Formel

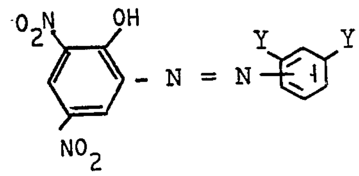

mit Diazoverbindungen eines Amins der Formel

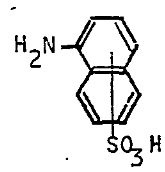

umsetzen und die Kupplungsprodukte gegebenenfalls in die Metallkomplexe überführen. Die Umsetzungen sind im Prinzip bekannt und bieten gegenüber der Herstellung von bekannten Stoffen keine Besonderheiten.

Besonders bevorzugt sind 4-, 6- oder 8-Sulfonaphthyl sowie die Fe-Komplexe.

Die Verbindungen der Formel I eignen sich insbesondere zum Färben von Ledern, wie vegetabilisch oder synthetisch nachgegerbtem Leder. Man erhält braune Färbungen mit guten Echtheiten.

Gegenüber einem nächstvergleichbaren Farbstoff, der aus der US-A-2 136 650, Beispiel 1, bekannt ist, zeichnen sich die erfindungsgemäßen Verbindungen überraschenderweise insbesondere durch eine bessere Lichtechtheit aus.

In den folgenden Beispielen beziehen sich Angaben über Teile und Prozente, sofern nicht anders vermerkt, auf das Gewicht.

Beispiel 1

19,9 Teile 1-Amino-2-hydroxy-3,5-dinitro-benzol werden in der üblichen Weise diazotiert und in sodaalkalischer Lösung auf 11 Teile Resorcin gekuppelt. Anschließend fügt man zu der Suspension bei pH 8-9 das Diazoniumsalz aus 22,3 Teilen 1-Naphthylamin-4-sulfonsäure hinzu. Nach beendeter Kupplung wird das Reaktionsgemisch mit Essigsäure auf pH 5 eingestellt, mit 38 Teilen wasserfreiem Eisen-IIIchlorid versetzt und bei pH 4-5 ungefähr 3 Stunden auf 90-95 °C erhitzt.

Nach erfolgter Metallisierung wird der Farbstoff durch Zugabe von Natriumchlorid abgeschieden, isoliert und getrocknet. Der Eisenkomplex der Verbindung der Formel

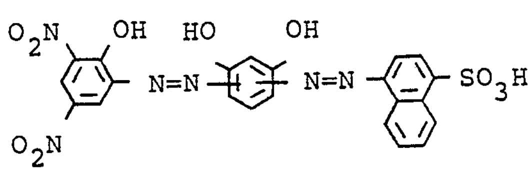

färbt Leder in licht- und naßechten gelbstichig braunen Tönen.

Die in der folgenden Tabelle genannten Farbstoffe lassen sich entsprechend der obigen Vorschrift synthetisieren.

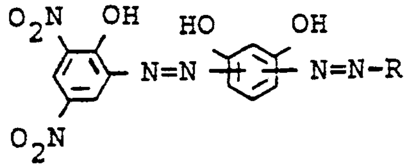

| Bsp. | R | Nuance der Färbung auf Leder der Metallkomplexe | | | | |
|---|---|---|---|---|---|---|
| | | | Cr | Co | | Fe |
| 2 | 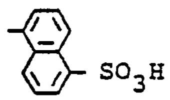 | | | | | gelb-braun |
| 3 | 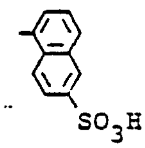 | | rot-braun | | | gelb-braun |
| 4 | 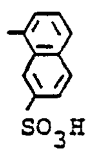 | | | | | |
| 5 | 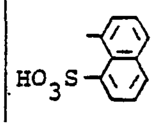 | | | | | |

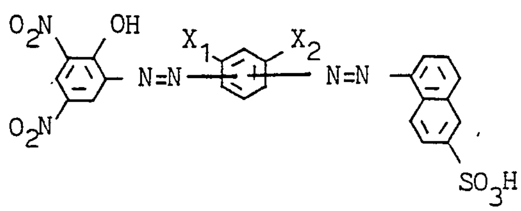

| Bsp. | $X_1$ | $X_2$ | | Nuance des Fe-Komplexes auf Leder |
|---|---|---|---|---|
| 6 | OH | $NH_2$ | | braun |
| 7 | $NH_2$ | $NH_2$ | | braun |

**Patentansprüche**

1. Cr-, Co- oder Fe-Komplexe von Verbindungen, die in Form der freien Säuren der Formel

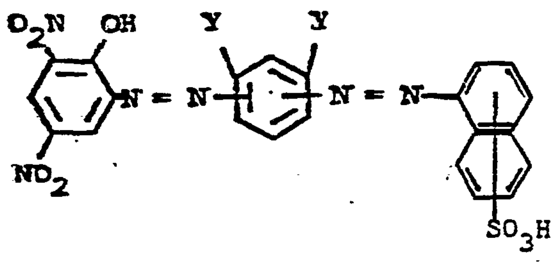

entsprechen, in der die Sulphogruppe in 4-, 5-, 6-, 7- oder 8-Stellung steht und die Reste Y unabhängig voneinander Hydroxy oder Amino sind.

2. Fe-Komplexe gemäß Anspruch 1.
3. Komplexe gemäß Anspruch 1 mit Y = OH.
4. Komplexe gemäß Anspruch 1 mit Y = $NH_2$.
5. Komplexe gemäß Anspruch 1, in denen die Sulfogruppe in 6-Stellung steht.
6. Die Verbindung gemäß Anspruch 1 der Formel

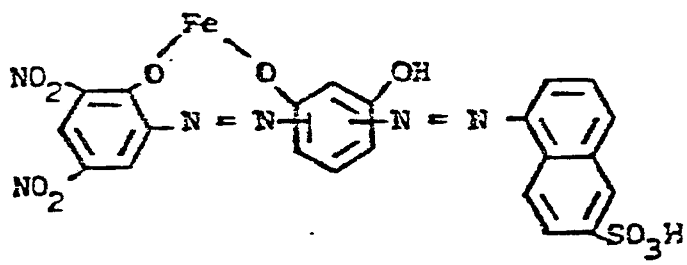

7. Die Verbindung gemäß Anspruch 1 der Formel

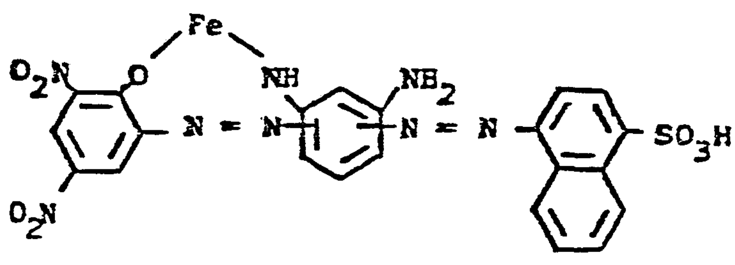

**Claims**

1. Cr, Co and Fe complexes of compounds which in the form of the free acids are of the formula

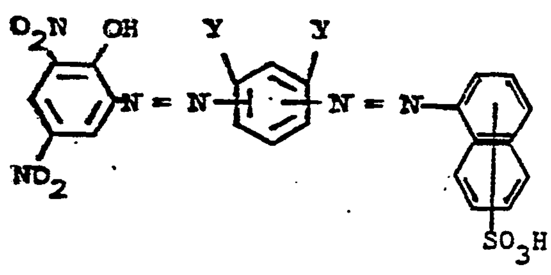

where the sulfo group is in the 4-, 5-, 6-, 7- or 8-position, and the radicals Y, independently of one another, are hydroxyl or amino.

2. Fe complexes as claimed in claim 1.
3. Complexes as claimed in claim 1, where Y = OH.
4. Complexes as claimed in claim 1, where Y = $NH_2$.
5. Complexes as claimed in claim 1, where the sulfo group is in the 6-position.
6. A compound as claimed in claim 1, of the formula

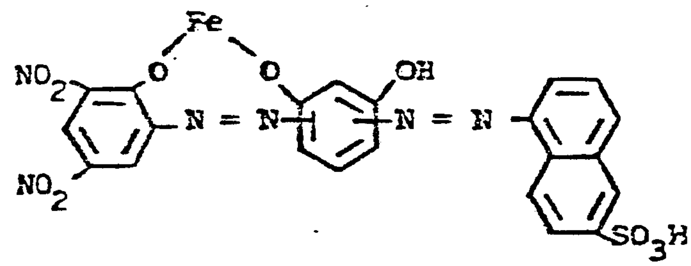

7. A compound as claimed in claim 1, of the formula

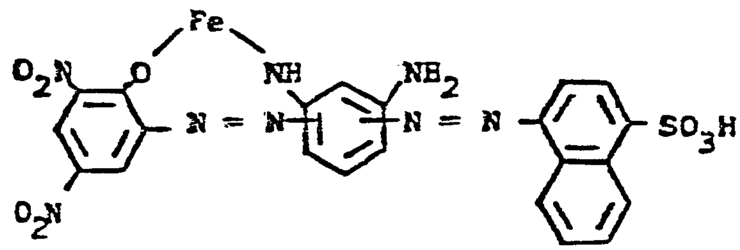

**Revendications**

1. Complexes de Cr, Co ou Fe et de composés qui, sous la forme des acides libres, répondent à la formule

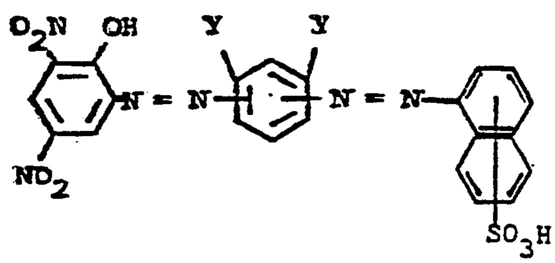

dans laquelle le groupe sulfo est en position 4, 5, 6, 7 ou 8 et les radicaux Y, indépendamment l'un de l'autre, sont des groupes hydroxy ou amino.

2. Complexes de Fe selon la revendication 1.
3. Complexes selon la revendication 1 avec Y = OH.
4. Complexes selon la revendication 1 avec Y = $NH_2$.
5. Complexes selon la revendication 1, dans lesquels le groupe sulfo est en position 6.
6. Composé selon la revendication 1 de formule

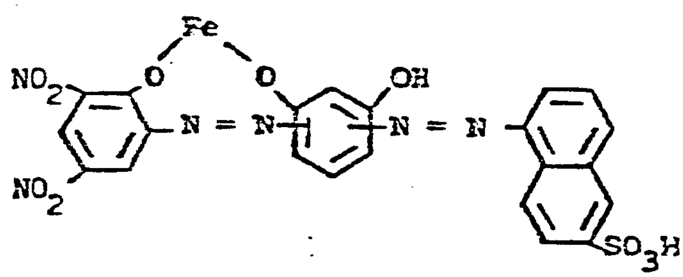

7. Composé selon la revendication 1 de formule